# EUROPEAN PATENT APPLICATION

(11) **EP 4 108 974 A1**
(43) Date of publication of application: **28.12.2022**
(21) Application number: 22179614.7
(22) Date of filing: 17.06.2022
(51) Int. Cl.: F16M 11/08, F16M 13/02, G05D 1/00, B60R 11/02, G06F 1/16

(54) **DISPLAY DEVICE**

(30) Priority: 24.06.2021 JP 2021104903
(71) Applicant: KOBELCO CONSTRUCTION MACHINERY CO., LTD., Hiroshima-shi Hiroshima 731-5161 (JP)
(72) Inventor: Sawada, Yusuke, Hiroshima (JP); Sasaki, Hitoshi, Tokyo (JP); Matono, Masataka, Hiroshima (JP); Okuda, Kenshiro, Hiroshima (JP); Yamazaki, Yoichiro, Tokyo (JP)
(74) Representative: Schön, Christoph

(57) **Abstract**

A display device 20 includes: a hinge 91; a first monitor device 21 including a first front surface 22; and a second monitor device 31 including a second front surface 32. Parallel planes from a virtual second front surface on a rear side by predetermined distances at a first angle a to a third angle c between the first front surface 22 and the virtual second front surface are defined as first to third virtual planes E to G. A rotation axis X1 of the hinge 91 is disposed on anyone of these three virtual planes or inside a space formed by the three virtual planes in a view in a direction parallel to the rotation axis XI, and the second front surface 32 is disposed at a position away from the rotation axis X1 on a front side of the second monitor device 31 by a predetermined distance.

## Description

### BACKGROUND OF THE INVENTION

### Field of the Invention

The present invention relates to a display device that comprises a plurality of monitor devices and an opening and closing device configured to hold the monitor devices such that the monitor devices can be opened and closed.

### Description of the Related art

In recent years, remote operation apparatuses configured to operate operation machines at operation sites through remote operations have been developed as disclosed in Japanese Patent Laid-Open No. 2020-200660. The remote operation apparatuses are transported to and assembled at installation places, and are then moved to other locations as needed after the installation. Therefore, the remote operation apparatuses are configured to be easily disassembled and assembled for satisfactory transportability. In a remote operation system in Japanese Patent Laid-Open No. 2020-200660, monitor devices are disposed in front of an operator, and the operator can manipulate an operation machine while viewing a surroundings video sent from an actual vehicle. In the remote operation apparatus, a left monitor device and a right monitor device are disposed to be adjacent to each other on both sides of a central monitor device to image a wide field of view. The monitor devices on both sides are connected to the central monitor device with an opening and closing device that freely opens and closes the monitor devices and are installed at angles with respect to the central monitor device in order for the operator to easily view the monitors. When the remote operation apparatus is transported, each monitor device and the opening and closing device are carried in an individually disassembled state.

In order to eliminate any blind angles and allow the operator to easily view the video with a realistic sensation of actually riding the vehicle, it is preferable to reduce clearances between the center monitor device and the monitor devices on both sides. Also, the angles of the monitor devices on both sides with respect to the central monitor device are preferably configured to be adjustable within a specific range in accordance with an installation location, a preference of the operator, and the like. Therefore, it is desirable to realize both a configuration in which angles of the monitor devices on both sides with respect to the central monitor device are adjustable and a state in which adjacent corner portions of front surfaces of the monitor devices are located as close to each other as possible maintained in a case in which the angles of the monitor devices on both sides are arbitrarily adjusted.

However, display devices that comprise opening and closing devices in the related art are not configured such that the angles of monitor devices on both sides with respect to center monitor devices are adjustable and cannot respond to the expectation that both the configurations are achieved.

The present invention was made in order to solve the aforementioned problem, and an object thereof is to provide a display device capable of achieving a state in which clearances between adjacent monitor devices are minimized even in a case in which angles of monitor devices on both sides with respect to the center monitor device are adjusted.

### SUMMARY OF THE INVENTION

A display device according to the present invention comprises: an opening and closing device including a first fixing device, a second fixing device, and a hinge configured to rotatably hold the first fixing device and the second fixing device; a first monitor device including a first front surface and held by the first fixing device; and a second monitor device including a second front surface and held by the second fixing device such that a distance to a rotation axis of the hinge is adjustable, in which when a plane passing through a width-direction end portion of the first front surface is defined as a virtual second front surface, parallel planes separated from the virtual second front surface by predetermined distances on a rear side are defined as a first virtual plane, a second virtual plane, and a third virtual plane in each of states in which an angle of the virtual second front surface with respect to the first front surface is a first angle, a second angle that is greater than the first angle, and a third angle at substantially a middle between the first angle and the second angle, and the rotation axis of the hinge is disposed on a plane among the first virtual plane to the third virtual plane in a space formed by the first virtual plane, the second virtual plane, and the third virtual plane and inside the space in a view in a direction parallel to the rotation axis of the hinge, and the second monitor device has the second front surface disposed at a position away from the rotation axis of the hinge toward a front side of the second monitor device by the predetermined distance.

### BRIEF DESCRIPTION OF THE DRAWINGS

FIG. 1 is a perspective view illustrating a remote operation apparatus that comprises a display device according to an embodiment of the present invention;
FIG. 2 is a rear view illustrating a rear surface side of the display device in FIG. 1;
Fig. 3 is a partial enlarged view of the portion J in FIG. 2;
FIG. 4 is a sectional view along the K-K section in FIG. 3;
FIG. 5 is a top view illustrating a state in which a second fixing device has been caused to rotate from FIG. 4;
FIG. 6 is a conceptual diagram illustrating a state in which an angle of a second monitor device with respect to the first monitor device has been changed from FIG. 4; and FIG. 7 is an enlarged view illustrating the main portion L in FIG. 6.

### DETAILED DESCRIPTION OF THE PREFERRED EMBODIMENTS

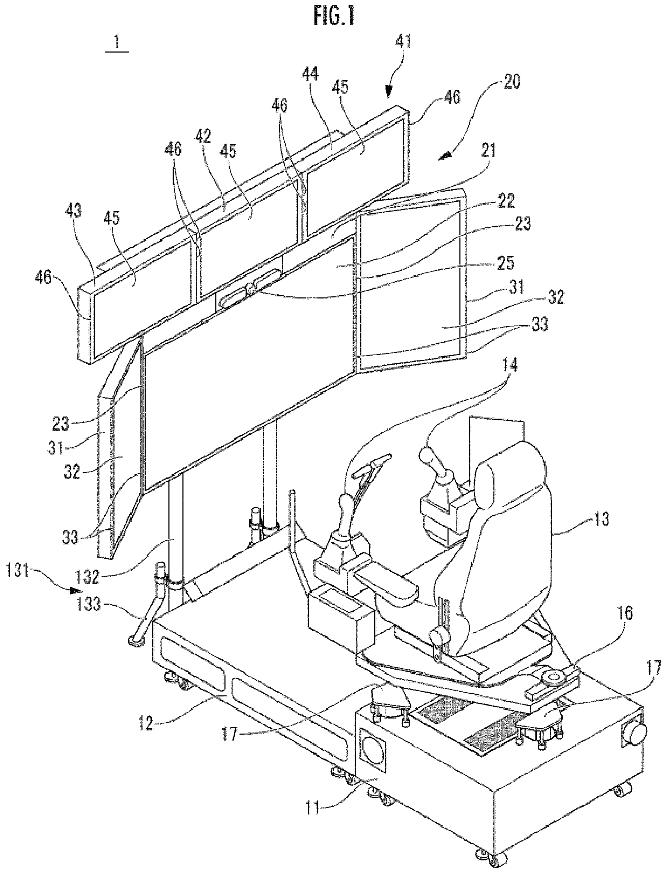

Referring to FIG. 1, a remote operation apparatus 1 that comprises a display device 20 according to the present invention will be described. The remote operation apparatus 1 is an apparatus for remotely operating a vehicle, which is not illustrated, in a wireless manner. The type of the vehicle is not limited, and the remote operation apparatus 1 can be used for any vehicles such as commercial vehicles including a passenger car, a truck, and a bus and construction machines. Examples of the construction machines include a crawler shovel. Hereinafter, a case in which a crawler shovel is remotely operated will be described as an embodiment.

The crawler shovel includes a crawler-type lower traveling body and an upper revolving body mounted on the lower traveling body via a revolving mechanism although not illustrated. The upper revolving body is provided with a cab and an operation attachment that comprises an arm with a bucket. The cab is provided with a control mechanism that enables a remote operation of an operation lever or the like and an imaging device configured to image a surrounding environment through a front window of the cab. An image captured by the imaging device is wirelessly transmitted to and displayed on the remote operation apparatus 1, such that an operator can visually recognize the image. The operator operates the remote operation apparatus 1 while viewing the transmitted image, a control signal is transmitted from the remote operation apparatus 1, and a construction machine is remotely operated. An acceleration sensor such as a gyro sensor configured to detect acceleration in three-axis directions is mounted in the construction machine, and a detected acceleration signal is wirelessly transmitted to the remote operation apparatus 1.

The remote operation apparatus 1 comprises a first casing 11, a second casing 12, a seat 13, an operation device 14, a rotation device 16, a vibration device 17, and a display device 20. The first casing 11 and the second casing 12 are base parts of the remote operation apparatus 1. The seat 13 and the operation device 14 are placed on the first casing 11. Although not illustrated, an arithmetic operation unit configured to control the remote operation apparatus 1, a communication device configured to communicate with a remote construction machine, a seat controller configured to control operations of the seat 13, and the like are disposed inside the first casing 11 and the second casing 12. The first casing 11 and the second casing 12 are configured to be split into two parts. Therefore, the remote operation apparatus 1 can be split into the first casing 11 and the second casing 12 when the remote operation apparatus 1 is moved to another location, and is configured to have excellent transportability.

The operator who performs a remote operation is seated in the seat 13 and remotely operates the construction machine while viewing the display device 20 on a front surface. In the surroundings of the seat 13, the operation device 14 including an information display such as a liquid crystal panel, an operation panel, a lever to be operated by the operator, and the like is disposed. The remote operation apparatus 1 comprises the rotation device 16 for operating the seat 13 and a vibration device 17 to reproduce a realistic sensation of actually riding the vehicle. In this manner, a rotation force and vibration of the seat 13 are reproduced in accordance with the acceleration detected by the acceleration sensor included in the construction machine to be remotely operated. According to the remote operation apparatus 1, it is possible to allow for a bodily sensation of a rotation force and vibration reproduced in the seat 13 and a bodily sensation as if the operator were actually riding the vehicle by viewing the image of the surrounding environment displayed on the display device 20, which will be described later.

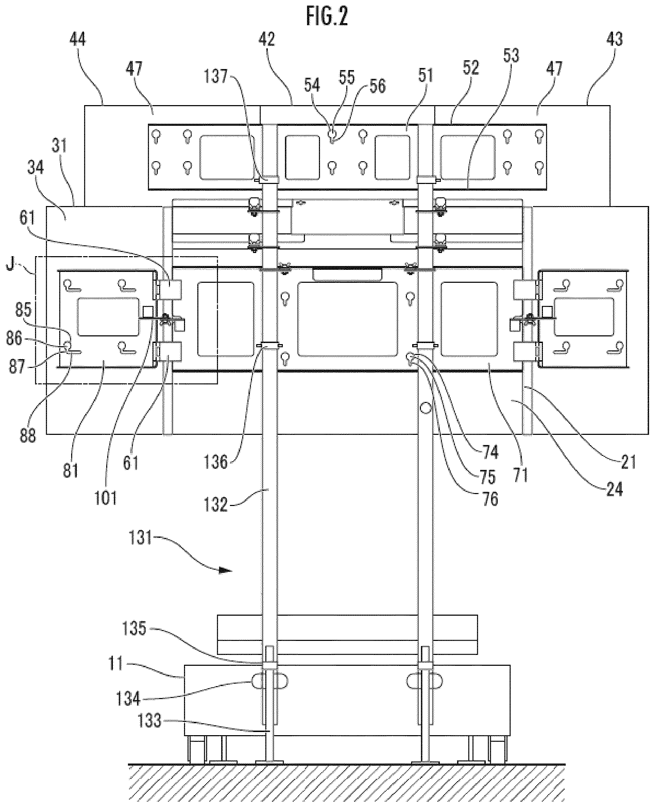

Referring to FIGS. 1 and 2, the display device 20 will be described. The display device 20 includes a first monitor device 21, second monitor devices 31, a third monitor device 41, an opening and closing device 61, and a monitor support device 131. The first monitor device 21 to the third monitor device 41 are disposed in front of the seat 13, such that the operator seated in the seat 13 can easily view the monitors. The width dimension and the height dimension of each monitor device are appropriately changed in accordance with the field of view to be displayed.

The first monitor device 21 is disposed at a front center of the seat 13. The first monitor device 21 includes a first front surface 22 on which an image is displayed, first width-direction end portions 23 and 23 which are end portions on both sides of the first front surface 22 in a width direction, and a first rear surface 24 which is a rear surface. A camera 25 directed to the seat 13 is disposed at an upper center of the front surface of the first monitor device 21. The camera 25 images the body including the face of the operator seated in the seat 13. In this manner, a visual recognition state of the operator through the display device 20, a seated posture of the operator, and the like are determined to control an operation mode and the like of the remote operation apparatus 1.

The second monitor devices 31 and 31 are disposed on the left side and the right side of the first monitor device 21 and display field of views on the left side and the right side of the field of view in front of the seat 13 displayed by the first monitor device 21 to make up for fields of view on both sides of the first monitor device 21. The second monitor devices 31 and 31 on the left side and the right side are disposed at slight angles toward the seat 13 with respect to the first monitor device 21 disposed to confront the seat 13. In other words, the second monitor devices 31 and 31 are disposed at angles at which the second monitor devices 31 and 31 confront the operator seated in the seat 13 when the operator look at the left or right side from the first monitor device 21. Each second monitor device 31 includes a second front surface 32 in which an image is displayed, second width-direction end portions 33 and 33 which are end portions on both sides of the second front surface 32 in the width direction, and a second rear surface 34 which is a rear surface. The height-direction dimension of the second monitor device 31 is substantially the same as the height-direction dimension of the first monitor device 21, and the width-direction dimension thereof is about 1/3 of the width-direction dimension of the first monitor device 21.

The third monitor device 41 is disposed across the first monitor device 21 and the left and right monitor devices 31 and 31 above the first monitor device 21 and the left and right second monitor devices 31 and 31 to make up for a field of view above the first monitor device 21 and the left and right second monitor devices 31 and 31. The third monitor device 41 includes a third central monitor device 42, a third left monitor device 43, and a third right monitor device 44 that are three monitor devices with the same size.
The three monitor devices are continuously disposed in the horizontal direction in a state in which the three monitor devices are in contact with each other with no clearances therebetween with the longitudinal directions thereof oriented in the horizontal direction. Each of the third central monitor device 42, the third left monitor device 43, and the third right monitor device 44 includes a third front surface 45 in which an image is displayed, third width-direction end portions 46 and 46 which are end portions on both sides of the third front surface 45 in the width direction, and a third rear surface 47 which is a rear surface.

Referring to FIGS. 1 and 2, a support structure for the first monitor device 21 to the third monitor device 41 will be described. FIG. 2 illustrates a rear surface of the display device 20. The first monitor device 21, the second monitor device 31, and the third monitor device 41 are supported by the monitor support device 131. The monitor support device 131 includes two first support members 132 which are hollow tubes, second support members 133 formed by hollow tubes fixed to the first support members 132, connecting devices 135 fixing upper end portions of the second support members 133 to portions near lower end portions of the first support members 132, and connection devices 134, 136, and 137 fixing the two first support members 132 to predetermined locations.

The two first support members 132 and 132 are fixed, at lower end portions thereof, to front side surface of the first casing with the connecting devices 134 and 134. Upper end portions of the second support members 133 and 133 are fixed immediately above the connecting devices 134 and 134 of the two first support members 132 and 132 with the connecting devices 135 and 135. As illustrated in FIG. 1, the second support members 133 and 133 are bent at folded portions immediately below the fixing portions of the connecting devices 135 and 135. Lower end portions of the second support members 133 and 133 extend in a direction downward and forward relative to the remote operation apparatus 1, that is, toward an obliquely front side up to a floor and are then in contact with the floor. The display device 20 is fixed to the first support members 132 and 132 between the centers and the upper ends of the first support members 132 and 132.

First, a support structure of the third monitor device 41 will be described. A third monitor device support plate 51 with a length from the third left monitor device 43 to the third central monitor device 42 and the third right monitor device 44 is attached to each of the rear surfaces of the three third monitor devices 42 to 44. The third monitor device support plate 51 is a plate-shaped member, and an upper edge portion 52 and a lower edge portion 53 formed to be folded over the entire length in the width direction are provided at the upper end portion and the lower end portion for improving strength.

A plurality of monitor rear surface fixing holes, which are not illustrated, are provided near center portions of the third rear surfaces 47 of the third central monitor device 42, the third left monitor device 43, and the third right monitor device 44. A total of four monitor rear surface fixing holes are provided at the positions of apexes in a case in which a virtual square having upper and lower sides parallel to the monitor width direction of the third monitor device 41 and having a side length in the height direction that is about a half of the height-direction dimension of each third monitor device is disposed at the center portion of each third rear surface 47. The monitor rear surface fixing holes are provided at four locations with similar disposition in each of the third rear surfaces 47 of the third central monitor device 42, the third left monitor device 43, and the third right monitor device 44.

Support plate fixing holes 54 are provided at positions corresponding to the monitor device fixing holes, that is, the positions of the apexes of the virtual substantially square shape in the third monitor device support plate 51, and a total of twelve support plate fixing holes 54 are provided for the three third monitor devices 42 to 44 in the entire third monitor device support plate 51. The third monitor device support plate 51 is fixed at the same height positions near the upper end portions of the two first support members 132 and 132 with the connecting devices 134 and 134. Also, a plurality of lightening holes with substantially square shapes are provided at locations other than the region where the support plate fixing holes 54 are formed in the third monitor device support plate 51 to reduce the mass.

As illustrated in FIG. 2, the support plate fixing holes 54 formed in the third monitor device support plate 51 are formed to have round hole portions 55 and straight hole portions 56 extending downward relative to the round hole portions 55. A fastening device including a straight shaft portion and a head portion with a larger outer diameter than the shaft portion, which is not illustrated, is inserted into each of the monitor rear surface fixing holes in the third monitor devices 42 to 44, and the hole diameter of the round hole portion 55 is formed to be slightly larger than that of the head portion of the fastening device. Also, the width direction perpendicularly intersecting the longitudinal direction of the straight hole portion 56 is formed to be slightly larger than the outer diameter of the shaft portion. The fastening device is, for example, a bolt, and each of the monitor rear surface fixing holes of the third monitor devices 42 to 44 is a bolt hole corresponding to the bolt, for example. The three third monitor devices 42 to 44 are fixed to the corresponding support plate fixing holes 54 in the third monitor device support plate 51 with the fastening devices.

Next, a support structure for the first monitor device 21 will be described. The first monitor device 21 and the second monitor devices 31 are supported by the opening and closing device 61. The opening and closing device 61 includes a first fixing device 71, a second fixing device 81, a hinge 91, and an angle fixing device 101. The first fixing device 71 with a length over the entire length of the first monitor device 21 in the width direction is attached to the rear surface 24 of the first monitor device 21. The first fixing device 71 is a plate-shaped member, and an upper edge portion 72 and a lower edge portion 73 formed to be folded over the entire length in the width direction are provided at an upper end portion and the lower end portion to improve strength.

A plurality of monitor rear surface fixing holes are provided in the surroundings of the center portion of the first rear surface 24 of the first monitor device 21. A total of four monitor rear surface fixing holes are provided at the positions of apexes in a case in which a virtual square having upper and lower sides parallel to the monitor width direction of the first monitor device 21 and having a side length in the height direction that is about a half of the height-direction dimension of the first monitor device 21 is disposed at the center portion of the first rear surface 24.

In the first fixing device 71, a total of four fixing holes 74 are provided at the positions corresponding to the monitor device fixing holes in the first monitor device 21, that is, the positions of the apexes of the virtual substantially square shape. The first fixing device 71 is fixed to the same height positions near the center portions of the two first support members 132 and 132 and immediately below the third monitor device 41 with the connecting devices 136 and 136. Also, a plurality of lightening holes with substantially square shapes are provided at locations other than the region where the support plate fixing holes 74 are formed in the first fixing device 71 to reduce the mass.

As illustrated in Fig. 2, the first fixing holes 74 formed in the first fixing device 71 have the same shapes as those of the support plate fixing holes 54 formed in the third monitor device support plate 51. In other words, the first fixing holes 74 are formed to have round hole portions 75 and straight hole portions 76 extending downward relative to the round hole portions 75. Fastening devices, which are the same as those in the case of the monitor rear surface fixing holes in the third monitor device, have straight shaft portions and head portions with larger diameters than the shaft portions, and are not illustrated, are inserted into the monitor rear surface fixing holes in the first monitor device. The hole diameter of the round hole portions 75 is formed to be slightly larger than the head portions of the fastening devices. Also, the width dimension that perpendicularly intersects the longitudinal direction of the straight hole portions 76 is formed to be slightly larger than the outer shape of the shaft portions. The fastening devices, which are not illustrated, are bolts, for example, and the monitor rear surface fixing holes in the first monitor device 21 are bolt holes corresponding to the bolts. The first monitor device 21 is fixed to the corresponding first fixing holes 74 in the first fixing device 71 with fastening devices.

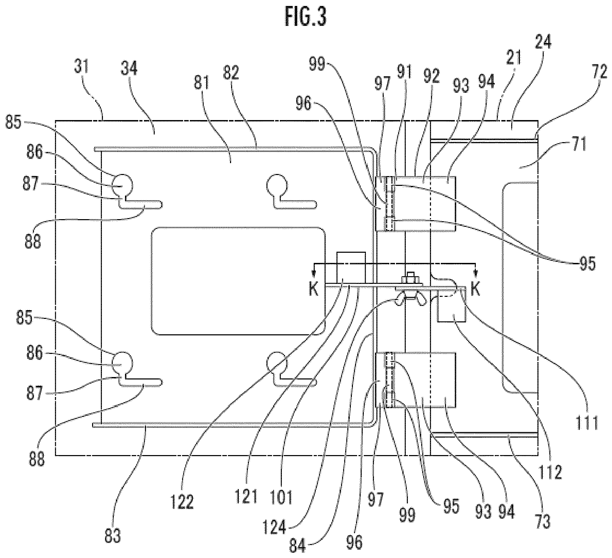

Referring to FIGS. 2 and 3, the support structure for the second monitor device 31 will be described. FIG. 3 is an enlarged view of the portion J in FIG. 2, and the connected portion between the first fixing device 71 and the second fixing device 81 is illustrated in an enlarged manner. The second fixing device 81 with a length over the entire length of each second monitor device 31 in the width direction is attached to the rear surface 34 of the second monitor device 31. The second fixing device 81 is a plate-shaped member, and an upper edge portion 82 and a lower edge portion 83 formed to be folded over the entire length in the width direction and a side edge portion 84 continued to adjacent end portions of the upper edge portion 82 and the lower edge portion 83 are provided at the upper end portion, the lower end portion, and the side end portion on the side of the first monitor device 21 for improving strengths. The second fixing device 81 is one member constituting the opening and closing device 61. Note that the second monitor devices 31 are disposed on both side portions of the first monitor device 21 in the width direction, and the second fixing devices 81, which will be described below, are horizontally symmetrically formed with respect to the first monitor device 21 at the center.

A plurality of monitor rear surface fixing holes, which are not illustrated, are provided in the surroundings of the center portion of the second rear surface 34 of each second monitor device 31. A total of four monitor rear surface fixing holes are provided for one second monitor device 31 at the positions of apexes in a case in which a virtual square having upper and lower sides parallel to the monitor width direction of the second monitor device 31 and having a length of the sides in the height direction that is about a half of the height-direction dimension of the second monitor device 31 is disposed at the center portion of the second rear surface 34.

In the second fixing device 81, a total of four second fixing holes 85 are provided for one second fixing device 81 at the positions corresponding to the monitor device fixing holes in the second monitor device 31, that is, the positions of the apexes of the virtual substantially square shape. Each of the second fixing devices 81 is connected to each of the width-direction end portions of the first fixing device 71 n both sides via a hinge 91, which will be described below. Also, a lightening hole with a substantially square shape is provided in a region surrounded by the four second fixing holes 85 in the second fixing device 81 to reduce a mass.

As illustrated in FIG. 3 in an enlarged manner, the second fixing holes 85 formed in the second fixing device 81 are formed to have round hole portions 86, first straight hole portions 87 extending downward with respect to the round hole portions 86, and second straight hole portions 88 formed in the horizontal direction on the side of the first monitor device 21 from the lower end portions of the first straight hole portions 87. Fastening devices having straight shaft portions and head portions with larger diameters than the shaft portions, which are not illustrated, are inserted into the monitor rear surface fixing holes in the second monitor device 31. The hole diameter of the round hole portions 86 is formed to be slightly larger than the head portions of the fastening devices. Also, the width dimension that perpendicularly intersects the longitudinal direction of each of the first straight hole portions 87 and the second straight hole portions 88 is formed to be slightly larger than the outer shape of the shaft portions. The fastening devices are, for example, bolts, and the monitor rear surface fixing holes in the second monitor device 31 are bolt holes corresponding to the bolts, for example. The second monitor device 31 is fixed to the corresponding second fixing holes 85 in the second fixing device 81 with the fastening devices.

The hinge 91 will be described with reference to FIGS. 3 to 6. The hinge 91 is a member that rotatably holds the first fixing device 71 and each second fixing device 81. The hinge 91 includes a first member 92 fixed to the first fixing device 71, a second member 96 fixed to the second fixing device 81, and a shaft 89 connecting the first member 92 to the second member 96. A total of two hinges 91 are provided between the first fixing device 71 and the second fixing device 81 on each side with the hinges 91 separated from each other in the up-down direction. Similarly, a total of two hinges 91 are provided between the first fixing device 71 and the second fixing device 81 on the other side with the hinges 91 separated from each other in the up-down direction. The two hinges 91 provided on the side of the second fixing device 81 on the one side and the two hinges 91 provided on the side of the second fixing device 81 on the other side are the same, and the hinges 91 are horizontally symmetrically disposed with respect to the first fixing device 71 at the center.

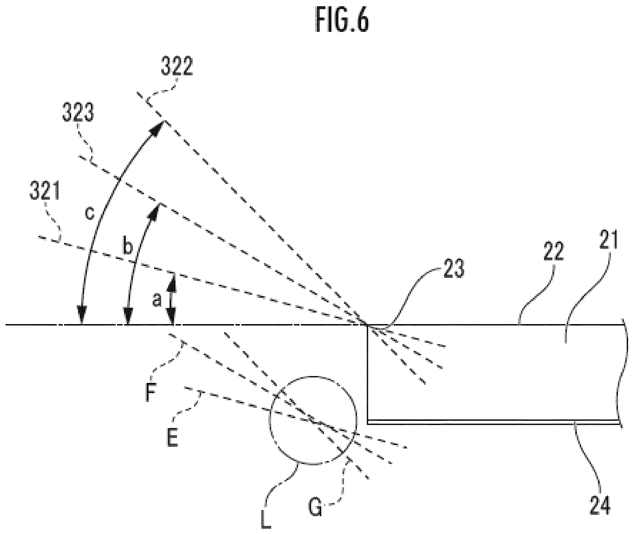

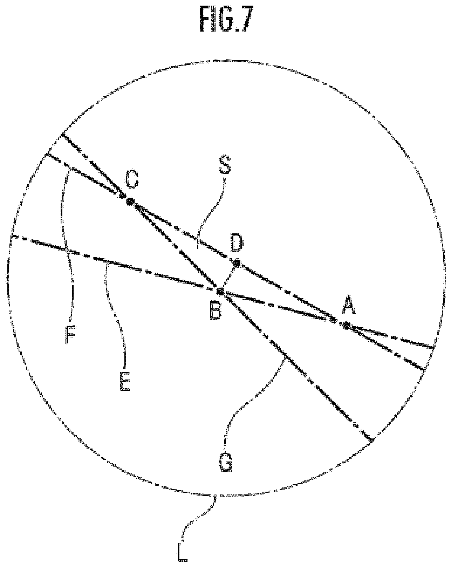

Each hinge 91 is disposed to have a rotation axis XI on any of a first virtual plane E, a second virtual plane G, and a third virtual plane F in a space S formed by the first virtual plane E to the third virtual plane F or inside the space S as illustrated in FIGS. 6 and 7 in a view in a direction parallel to the rotation axis XI.

The first virtual plane E is a plane that is parallel to and separated from the virtual second front surface 321 on the rear side by a predetermined distance, where the virtual second front surface 321 is a virtual plane that passes through the first width-direction end portion 23 on the first front surface 22 included in the first monitor device 21 on the side of the second monitor device 31 and has a first angle a as an angle with respect to the first front surface 22.

The second virtual plane G is a plane that is parallel to and separated from a virtual second front surface 322 on the rear side by a predetermined distance, where the virtual second front surface 322 is a virtual plane that passes through the first width-direction end portion 23 on the first front surface 22 included in the first monitor device 21 on the side of the second monitor device 31 and has a second angle c that is larger than the first angle a as an angle with respect to the first front surface 22.

The third virtual plane F is a plane that is parallel to and separated from the virtual second front surface 323 on the rear side by a predetermined distance, where the virtual second front surface 323 is a virtual plane that passes through the first width-direction end portion 23 on the first front surface 22 included in the first monitor device 21 on the side of the second monitor device 31 and has a third angle B in the middle between the first angle a and the second angle c as an angle with respect to the first front surface 22.

The first virtual plane E, the third virtual plane F, and the second virtual plane G is separated from the virtual second front surfaces 321, 322, and 323, respectively, on the rear side by the predetermined distances in order for each of the first virtual plane E, the third virtual plane F, and the second virtual plane G not to intersect the first fixing device 71.

As illustrated in FIG. 7 which is a diagram illustrating the main portion L in FIG. 6, the first virtual plane E, the third virtual plane F, and the second virtual plane G intersect each other. The point A is an intersection between the first virtual plane E and the third virtual plane F. The point B is an intersection between the first virtual plane E and the second virtual plane G. The point C is an intersection between the first virtual plane E and the second virtual plane G. The point D is an intermediate point between the point A and the point C.

The space S formed by the first virtual plane E, the second virtual plane G, and the third virtual plane F is represented as a triangle having the point A, the point B, and the point C in FIG. 7 as apexes. The hinge 91 is disposed in the space S. Note that the present embodiment illustrates an example in which the hinge 91 is disposed at the point D.

The first angle a, the second angle c, and the third angle b are angles set to obtain a state in which the first width-direction end portion 23 of the first front surface 22 included in the first monitor device 21 and the second width-direction end portion 33 of the second front surface 32 included in each second monitor device 31 have approached as much as possible when the angle of the second monitor device 31 with respect to the first monitor device 21 is any one of these three angles. Although the first angle a is set to 25 [deg], the second angle c is set to 45 [deg], and the third angle b is set to 3 [deg] in the present embodiment, other angles may be set.

The first member 92 includes a first plate-shaped portion 93 formed of a plate-shaped member and two first tubular portions 95. A first attachment portion 94 formed into a planar shape continuous with the first plate-shaped portion 93 to be attached to the first fixing device 71 is included at the end portion of the first plate-shaped portion 93 on the side of the first fixing device 71. Also, the first tubular portions 95 and 95 are included at an upper end portion and a lower end portion of the end portion of the first plate-shaped portion 93 on the side of the second fixing device 81 with the first tubular portions 95 and 95 separated from each other.

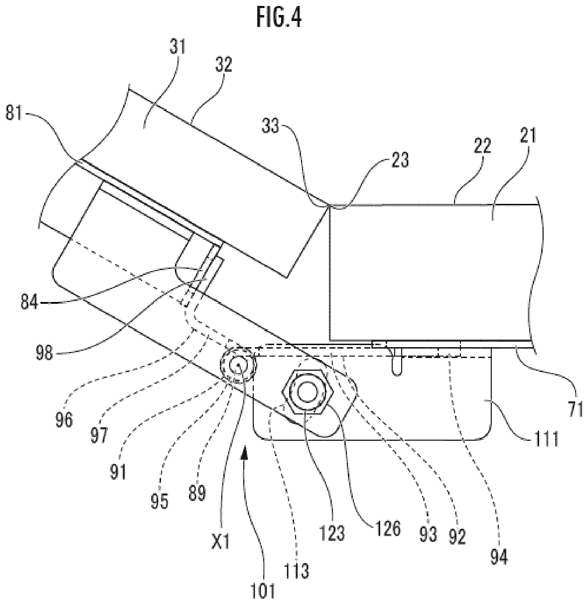

The second member 96 will be described with reference to FIGS. 3 and 4. The second member 96 includes a second plate-shaped portion 97 formed of a plate-shaped member and a second tubular portion 99. A second attachment portion 98 connected at a right angle to the second plate-shaped portion 97 and fixed to the side edge portion 84 of the second fixing device 81 is included at the end portion of the second plate-shaped portion 97 on the side of the second fixing device 81. FIG. 4 illustrates the second attachment portion 98 connected at a right angle to the second plate-shaped portion 97. Also, the second tubular portion 99 is included at the center portion of the end portion of the second plate-shaped portion 97 on the side of the first fixing device 71. The second tubular portion 99 is disposed with the center axes of the second tubular portion 99 and the two first tubular portions 95 and 95 conforming to each other in a state in which the second tubular portion 99 is sandwiched between the two first tubular portions 95 and 95 via slight clearances. A shaft 89 is disposed to penetrate through the second tubular portion 99 and the two first tubular portions 95 and 95. With such a configuration, the second plate-shaped portion 97 supports the second monitor device 31 such that the second front surface 32 is disposed at a position separated from the rotation axis of the hinge 91 toward the front side of the second monitor device 31 by the predetermined distance.

The angle fixing device 101 included in the opening and closing device 61 will be described with reference to FIG. 3. The angle fixing device 101 is a device that holds the first fixing device 71 and the second fixing device 81 in predetermined angular states. The angle fixing device 101 comprises a first regulating portion 111 fixed to the first fixing device 71 and having an arc-shaped first hole 113 and a second regulating portion 121 fixed to the second fixing device 81 and having a circular second hole 125 and a coupling portion that can be disposed to penetrate through the first hole 113. As illustrated in FIG. 3, the first regulating portion 111 and the second regulating portion 121 are disposed one by one between each of the both end portions of the first fixing device 71 in the width direction and the second fixing device 81 and between the two hinges 91 in the up-down direction. The first regulating portion 111 is fixed to the first fixing device 71 while the second regulating portion 121 is fixed to the second fixing device 81.

In the following description, the positions of one end portion and the other end portion of each of the first regulating portion 111 and the second regulating portion 121 will be described on the assumption that the end portion on the side of the first fixing device 71 is the one end portion and the end portion on the side of the second fixing device 81 is the other end portion. The first regulating portion 111 is a plate-shaped member, and a first end portion 112 that is a plate-shaped member, extends downward at a right angle with respect to the one end of the first regulating portion 111, and attached parallel to the first fixing device 71 is provided on the side of the one end. The first end portion 112 is fixed to the first fixing device 71 with mutual surfaces thereof mated. Also, the second regulating portion 121 is a plate-shaped member, and a second end portion 122 that is a plate-shaped member, extends upward at a right angle with respect to the plate-shaped member, and attached parallel to the second fixing device 81 is provided on the side of the other end of the second regulating portion 121. The second end portion 122 is fixed to the second fixing device 81 with mutual surfaces thereof mated.

Detailed portions of each of the first regulating portion 111 and the second regulating portion 121 will be described with reference to FIG. 4. FIG. 4 is sectional view along K-K in FIG. 3 and illustrates the top surface of the angle fixing device 101. FIG. 4 illustrates a state in which the display device 20 is fixed at a predetermined angle. The first hole 113 is provided on the side of the other end portion of the first regulating portion 111. The first hole 113 is an arc-shaped long hole having an arc of a virtual circle with a predetermined radius around the rotation axis XI of the hinge 91 as a longitudinal direction. The first hole 113 is located behind the first fixing device 71 except for a portion behind the rotation axis X1.

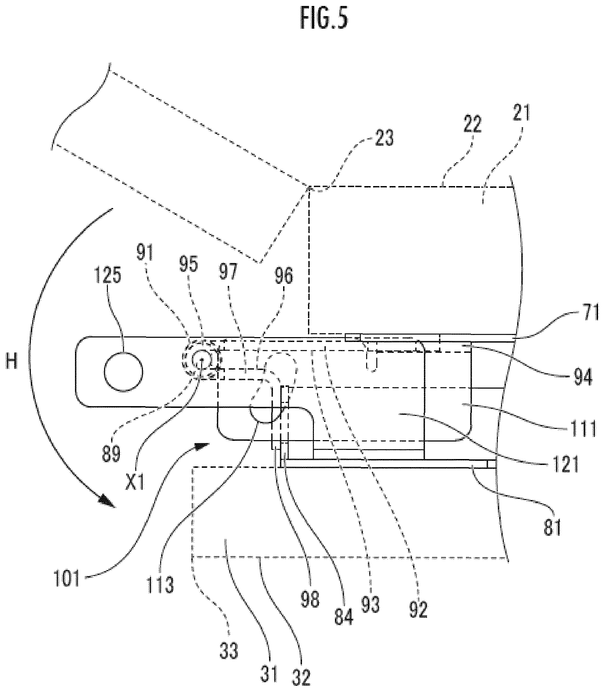

A coupling portion is provided on the side of the one end portion of the second regulating portion 121. The coupling portion includes a fastening unit 123 having a center hole, into which a rod-shaped member is inserted, which has a screw grove such that fastening can be achieved by mutual screw grooves, and a position fixing unit 124. The center position of the fastening unit 123 is provided on a circumference with the same radius as the radius of the virtual circle where the first hole 113 is located. In other words, the center position of the fastening unit 123 is located on the center line in the longitudinal direction of the first hole 113. The fastening unit 123 is a nut fixed to the second regulating portion 121 through welding, for example. Also, the second hole 125 with substantially the same diameter as the center hole of the fastening unit 123 of the second regulating portion 121 is provided coaxially at the position of the center hole of the fastening unit 123. Although the second hole 125 is hidden by the fastening unit 123 in FIG. 4, the second hole 125 is illustrated in FIG. 5 in which the fastening unit 123 is omitted. As will be described later, the position fixing unit 124 penetrates through the first hole 113 and the second hole 125 and is then fastened to the fastening unit 123.

With the aforementioned configuration, it is possible to reduce the thickness of the first regulating portion 111 to be thin and to obtain a thin opening and closing device 61 since the first hole 113 is formed behind the first fixing device 71 except for the portion behind the rotation axis XI, while in a case in which the first hole 113 is formed behind the rotation axis XI, the thickness of the first monitor device 21 from the first front surface 22 to the rear end portion of the first regulating portion 111 increases by the amount corresponding to the formation of the first hole 113 in addition to the thickness of the rotation axis XI. Note that the fastening unit 123 may be formed as a separate element without being fixed to the second regulating portion 121. Also, the fastening unit 123 having the center hole into which the rod-shape member is inserted and can be fastened may be configured as a separate member such as a nut and may be fixed t the second regulating portion 121, or the fastening unit 123 may be provided directed at a predetermined position of the second regulating portion 121. In such a case, the fastening unit 123 is formed at the position of the second hole 125 illustrated in FIG. 5, and the position fixing unit 124 penetrates through the first hole 113 and is then fastened to the fastening unit 123.

The position fixing unit 124 is inserted into the first hole 113 and the center hole of the fastening unit 123 when the first fixing device 71 and the second fixing device 81 are at predetermined angular positions, and the first fixing device 71 and the second fixing device 81 are held at predetermined angles. The position fixing unit 124 is a member including a shaft portion with a screw formed thereon and an operation portion that causes the shaft portion to rotate. The position fixing unit 124 is, for example, a thumbscrew as illustrated in FIG. 3. The thumbscrew that is the position fixing unit 124 is fixed with the first regulating portion 111 and the second regulating portion 121 pinched by the tip end of the shaft portion thereof being inserted into and fastened to the fastening unit 123. The first hole 113 and the coupling portion form an angle fixing unit 126. Alternatively, the first hole 113, the second hole 125, and the coupling portion form the angle fixing unit 126. In other words, the display device 20 includes the angle fixing unit 126 configured to fix the angle of the second front surface 32 with respect to the first front surface 22.

FIG. 5 illustrates the first fixing device 71 and the second fixing device 81 in a state in which the first monitor device 21 and the second monitor devices 31 have been detached to transport the remote operation apparatus 1. The second fixing device 81 is kept in a state in which the second fixing device 81 is rotated by 180° or more in the direction of the arrow H until an angle at which the surface on the side on which the rear surface 34 of the second monitor device 31 faces backward is reached around the rotation axis XI of the hinge 91 connected to the second regulating portion 121. As illustrated in FIG. 5, the first fixing device 71 and the second fixing device 81 can be rotated by the hinge 91 up to positions at which the first front surface 22 and the second front surface 32 are parallel to and separated from each other. In this state, the first hole 113 is located between the plane where the first front surface 22 is located and the plane where the second front surface 32 is located in a case in which the first front surface 22 and the second front surface 32 are rotated by the hinge 91 to the positions at which the first front surface 22 and the second front surface 32 are parallel to and separated from each other. It is thus possible to compactly fold the display device 20 and to enhance transportability.

Next, an assembly procedure for installing the remote operation apparatus 1 will be described below.

### (1) Assembly of first casing 11 and the like

The first casing 11, the second casing 12, the seat 13, the operation device 14, the rotation device 16, and the vibration device 17 are disposed at the installation location, and signal lines and power source lines are then connected.

### (2) Attachment of monitor support device 131

The two first support members 132 and 132 are attached to the second casing 12 with the connecting devices 134 and 134, and the second support members 133 and 133 are attached to the first support members 132 and 132 with the connecting devices 135 and 135.

### (3) Attachment of first fixing device 71 and a third monitor device support plate 51

The first fixing device 71 in a state in which the second fixing device 81, the hinges 91, and the angle fixing device 101 are attached is fixed to a predetermined location near the center of the first support members 132 and 132 with the connecting devices 136 and 136. The third monitor device support plate 51 is fixed to a predetermined location near the upper ends of the first support members 132 and 132 with the connecting devices 137 and 137.

### (4) Attachment of first monitor device 21

First, fastening devices are fastened to all the monitor device fixing holes in the first rear surface 24 of the first monitor device 21 up to about 50% to 70% of the screw length of the fastening devices. The first monitor device 21 is lifted, and the head portions of all the fastening devices fastened to the first rear surface 24 are made to pass into the round hole portions 75 of the corresponding first fixing holes 74 in the first fixing device 71. The shaft portions of the fastening devices are caused to move to the inside of the straight hole portions 76 with the first monitor device 21 shifted downward. Once the shaft portions of the fastening devices reach the lower ends of the straight hole portions 76, then hands are released, and a temporarily held state is achieved. Thereafter, the fastening devices are fastened to achieve firm fixing.

### (5) Attachment of third monitor device 41

Fastening devices are inserted into all the monitor rear surface fixing holes in the third rear surfaces 47 of the three third monitor devices 42 to 44 and are fastened up to about 50% to 70% of the screw length of the fastening devices. First, the third central monitor device 42 is lifted, and the head portions of all the fastening devices fastened to the rear surface of the third central monitor device 42 are made to pass into the round hole portions 55 of all the corresponding support plate fixing holes 54 in the third monitor device support plate 51. The shaft portions of the fastening devices are caused to move to the inside of the straight hole portions 56 with the third central monitor device 42 shifted downward. Once the shaft portions of the fastening devices reach the lower ends of the straight hole portions 56, then the hands are released, and a temporarily held state is achieved. Thereafter, the fastening devices are fastened to achieve firm fixing. The third left monitor device 43 and the third right monitor device 44 on the left and right sides are also attached similarly to the third central monitor device 42.

### (6) Attachment of second monitor device 31

First, the position fixing unit 124 is screwed into and fastened to the fastening unit 123 of the angle fixing device 101 such that the second fixing device 81 does not move relative to the first fixing device 71 in a state in which the second fixing device 81 is opened substantially parallel to the first fixing device 71 for an easy operation. Fastening devices are inserted into all the monitor rear surface fixing holes in the second rear surfaces 34 of the two second monitor devices 31 and 31 and are fastened up to about 50% to 70% of the screw length of the fastening devices. First, one of the second monitor devices 31 on the left and right sides is lifted, and the head portions of all the fastening devices fastened to the second rear surface 34 are made to pass into the round hole portions 86 of all the corresponding second fixing holes 85 in the second fixing device 81. The shaft portions of the fastening devices are caused to move to the inside of the first straight hole portions 87 with the second monitor device 31 shifted downward. Once the shaft portions of the fastening devices reach the lower ends of the first straight hole portions 87, then the hands are released, and a temporarily held state is achieved. Thereafter, the fastening devices are fastened to achieve firm fixing. The other second monitor device 31 is also similarly attached.

The remote operation apparatus 1 is installed by the aforementioned method. Note that a procedure opposite to the aforementioned procedure is basically performed for disassembly at the time of transport.

Next, a procedure in which the angle fixing device 101 changes the angle between the first fixing device 71 and the second fixing device 81 will be described below.

First, the fastening devices at the lower ends of the first straight hole portions 87 are loosened. In a case in which the fastening devices have moved on the side of the hinge 91 along the second straight hole portion 88 at this time, the second monitor device 31 is caused to move to the side away from the hinge 91, and the fastening devices are slid and located at the lower ends of the first straight hole portions 87. Next, the fastening achieved by the position fixing unit 124 is loosened, such that the second fixing device 81 can turn around the rotation axis XI of the hinge 91 relative to the first fixing device 71. Then, the angle of the second monitor device 31 with respect to the first monitor device 21 is adjusted, and the position fixing unit 124 is reliably fastened again. Thereafter, the fastening devices are caused to move up to positions at which the clearance between the second width-direction end portion 33 of the second monitor device 31 and the first width-direction end portion 23 of the first monitor device 21 is reduced by causing the fastening devices to move on the side of the hinge 91 along the second straight hole portions 88, and if the movement ends, the fastening devices are reliably fastened to the second straight hole portions 88.

It is possible to perform angle adjustment for the second monitor device 31 relative to the first monitor device 21.

Advantages of the opening and closing device 61 included in the display device 20 will be described.

In a case in which the rotation axis XI of the hinge 91 is disposed on an arbitrary plane among the first virtual plane E, the second virtual plane G, and the third virtual plane F in the space formed by the first virtual plane E, the second virtual plane G, and the third virtual plane F in the opening and closing device 61, the second front surface 32 is located in the virtual second front surface having an angle formed by the arbitrary virtual plane among E to G (any of the first angle a, the second angle c, and the third angle b) as the angle with respect to the first front surface 22 when the angle of the second front surface 32 with respect to the first front surface 22 is the angle formed by the arbitrary virtual plane among E to G (any of the first angle a, the second angle c, and the third angle b). Also, it is possible to cause the second width-direction end portion 33 of the second monitor device 31 to abut the first width-direction end portion 23 of the first monitor device 21 and to minimize the clearance by causing the second monitor device 31 to the side of the hinge 91 in the state in which the second front surface 32 is located in the virtual second front surface having the angle formed by the arbitrary virtual plane among E to G as the angle with respect to the first front surface 22.

Specifically, the rotation axis XI of the hinge 91 is disposed at the point D on the third virtual plane F inside the space S, and the second front surface 32 is disposed at a position separated from the third virtual plane F toward the front side of the second monitor device 31 by the predetermined distance. It is possible to achieve the state in which the second front surface 32 is located in the virtual second front surface 323 by changing the angle between the first fixing device 71 and the second fixing device 81. In other words, it is possible to achieve the state in which the second front surface 32 is located in the virtual second front surface 323 in a case in which the third virtual plane F is selected as the arbitrary virtual plane. If the second front surface 32 is caused to move to the side of the hinge 91 relative to the second monitor device 31 in this state, then the second front surface 32 moves on the virtual second front surface 323. Also, it is possible to minimize the clearance between the second width-direction end portion 33 of the second monitor device 31 and the first width-direction end portion 23 of the first monitor device 21 by causing the second front surface 32 to move up to positions at which second width-direction end portion 33 of the second monitor device 31 abuts the first width-direction end portion 23 of the first monitor device 21.

In this manner, in a case in which the rotation axis XI of the hinge 91 is disposed on the third virtual plane F inside the space S, it is possible to minimize the clearance between the second width-direction end portion 33 of the second monitor device 31 and the first width-direction end portion 23 of the first monitor device 21 by changing the angle between the first fixing device 71 and the second fixing device 81 to achieve a state in which the second front surface 32 is located in the virtual second front surface 323 and moving the second front surface 32 in a same manner.

In a case in which the rotation axis XI of the hinge 91 is disposed on the first virtual plane E inside the space S, it is possible to minimize the clearance between the second width-direction end portion 33 of the second monitor device 31 and the first width-direction end portion 23 of the first monitor device 21 by changing the angle between the first fixing device 71 and the second fixing device 81 to achieve a state in which the second front surface 32 is located in the virtual second front surface 321 and moving the second front surface 32 in a same manner.

In a case in which the rotation axis XI of the hinge 91 is disposed on the second virtual plane G inside the space S, it is possible to minimize the clearance between the second width-direction end portion 33 of the second monitor device 31 and the first width-direction end portion 23 of the first monitor device 21 by changing the angle between the first fixing device 71 and the second fixing device 81 to achieve a state in which the second front surface 32 is located in the virtual second front surface 322 and moving the second front surface 32 in a same manner.

Note that in a case in which the rotation axis XI of the hinge 91 is disposed at the point A, the rotation axis XI is disposed on the first virtual plane E and the third virtual plane F inside the space S, and it is possible to achieve a state in which the second front surface 32 is located in the virtual second front surface 321 or the virtual second front surface 323 by changing the angle between the first fixing device 71 and the second fixing device 81.

Also, in a case in which the rotation axis XI of the hinge 91 is disposed at the point B, the rotation axis XI of the hinge 91 is disposed on the first virtual plane E and the second virtual plane G inside the apace S, and it is possible to achieve a state in which the second front surface 32 is located in the virtual second front surface 321 or the virtual second front surface 322 by changing the angle between the first fixing device 71 and the second fixing device 81.

Also, in a case in which the rotation axis XI of the hinge 91 is disposed at the point C, the hinge 91 is disposed on the first virtual plane E and the second virtual plane G inside the space S, and it is possible to achieve a state in which the second front surface 32 is located in the virtual second front surface 322 or the virtual second front surface 323 by changing the angle between the first fixing device 71 and the second fixing device 81.

Moreover, it is possible to minimize the clearance between the second width-direction end portion 33 of the second monitor device 31 and the first width-direction end portion 23 of the first monitor device 21 by causing the second monitor device 31 to move to the side of the hinge 91 as long as the angle of the second front surface 32 with respect to the first front surface 22 falls within a range from the first angle a to the second angle c even in a case in which the rotation axis XI of the hinge 91 is disposed on an arbitrary plane among the first virtual plane E, the second virtual plane G, and the third virtual plane F and the angle of the second front surface 32 with respect to the first front surface 22 is an angle different from the angle formed by the arbitrary virtual plane among E to G (any of the first angle a, the second angle c, and the third angle b).

On the other hand, in a case in which the rotation axis XI of the hinge 91 is not disposed on the arbitrary virtual plane among E to G, the second front surface 32 is located at a further deviated location relative to the virtual second front surface having an angle of an arbitrary virtual plane (any of the first angle, the second angle, and the third angle) as the angle with respect to the first front surface 22 when the angle of the second front surface 32 with respect to the first front surface 22 is the angle of the arbitrary virtual plane among E to G (any of the first angle a, the second angle c, and the third angle b) as the rotation axis XI of the hinge 91 is further separated from the arbitrary virtual plane.
Thus, even if it is possible to align the second front surface 32 to be parallel to the virtual second front surface having the angle of the arbitrary virtual plane among E to G as the angle with respect to the first front surface 22, it is not possible to locate the second front surface 32 in the virtual second front surface, and it is not possible to cause the second width-direction end portion 33 of the second monitor device 31 to abut the first width-direction end portion 23 of the first monitor device 21 even if the second monitor device 31 is caused to move on the side of the hinge 91.

However, since the rotation axis of the hinge 91 is disposed inside the space S that is close to all the virtual planes, namely the first virtual plane E, the second virtual plane G, and the third virtual plane F, it is possible to minimize the clearance between the second width-direction end portion 33 of the second monitor device 31 and the first width-direction end portion 23 of the first monitor device 21 by causing the second monitor device 31 to move to the side of the hinge 91 even when the angle of the second front surface 32 with respect to the first front surface 22 within the angle adjustment range from the first angle a to the second angle c is any angle.

Specifically, the rotation axis XI of the hinge 91 is disposed on the point D on the third virtual plane F inside the space S. If the first virtual plane E or the second virtual plane G is considered as the arbitrary virtual plane, the rotation axis XI of the hinge 91 is disposed at a position away from the arbitrary virtual plane inside the space S. Here, although it is possible to align the second front surface 32 with respect to the virtual second front surface 321 or the virtual second front surface 322 even if the angle between the first fixing device 71 and the second fixing device 81 is changed, it is not possible to locate the second front surface 32 in the virtual second front surface 321 or the virtual second front surface 322. However, it is possible to minimize the clearance between the second width-direction end portion 33 of the second monitor device 31 and the first width-direction end portion 23 of the first monitor device 21 by causing the second monitor device 31 to move to the side of the hinge 91 in a state in which the second front surface 32 is aligned to be parallel to the virtual second front surface 321 or the virtual second front surface 322.

In a case in which the rotation axis XI of the hinge 91 is disposed on the second virtual plane G inside the space S, it is possible to minimize the clearance between the second width-direction end portion 33 of the second monitor device 31 and the first width-direction end portion 23 of the first monitor device 21 by causing the second monitor device 31 to move to the side of the hinge 91 in the state in which the second front surface 32 is aligned to be parallel to the virtual second front surface 321 or the virtual second front surface 323.

Also, in a case in which the rotation axis XI of the hinge 91 is disposed on the first virtual plane E inside the space S, it is possible to minimize the clearance between the second width-direction end portion 33 of the second monitor device 31 and the first width-direction end portion 23 of the first monitor device 21 by causing the second monitor device 31 to move to the side of the hinge 91 in the state in which the second front surface 32 is aligned to be parallel to the virtual second front surface 322 or the virtual second front surface 323.

In addition, in a case in which the rotation axis XI of the hinge 91 is disposed at any position inside the space S except for the first virtual plane E, the second virtual plane G, and the third virtual plane F, it is possible to minimize the clearance between the second width-direction end portion 33 of the second monitor device 31 and the first width-direction end portion 23 of the first monitor device 21 by causing the second monitor device 31 to move to the side of the hinge 91 in the state in which the second front surface 32 is aligned to be parallel to any of the virtual second front surfaces 321, 322, and 323.

The rotation axis XI of the hinge 91 is disposed at the point D in the present embodiment for the following reason.

In comparison with the amount of deviation generated between the second front surface 32 and the virtual second front surface 322 when the second front surface 32 is set to be parallel to the virtual second front surface 322 in a case in which the rotation axis XI of the hinge 91 is disposed at the point A, or the amount of deviation generated between the second front surface 32 and the virtual second front surface 321 when the second front surface 32 is set to be parallel to the virtual second front surface 321 in a case in which the rotation axis XI of the hinge 91 is disposed at the point C, it is possible to reduce the amount of deviation generated between the second front surface 32 and the virtual second front surface 321 or the virtual second front surface 322 when the second front surface 32 is set to be parallel to the virtual second front surface 321 or the virtual second front surface 322 in a case in which the rotation axis XI of the hinge 91 is disposed at the point D, and it is possible to minimize the clearance generated between the second width-direction end portion 33 of the second monitor device 31 and the first width-direction end portion 23 of the first monitor device 21 in a case in which the second monitor device 31 is caused to move to the side of the hinge 91. It is thus possible to minimize the change in size of the clearance between the second width-direction end portion 33 of the second monitor device 31 and the first width-direction end portion 23 of the first monitor device 21 generated when the operator adjusts the angle of the second front surface 32 with respect to the first front surface 22.

In the present invention, the rotation axis of the hinge is disposed on a plane among the first virtual plane to the third virtual plane in a space formed by the first virtual plane, the second virtual plane, and the third virtual plane or inside the space. Each virtual plane is a parallel plane that is separated on the rear side of the virtual second front surface by a predetermined distance when the angle of the virtual second front surface passing through the width-direction end portion of the first front surface with respect to the first front surface is a first angle, a second angle, or a third angle. The second monitor device has the second front surface disposed at a position separated from the rotation axis of the hinge toward the front side of the second monitor device by the predetermined distance.

Therefore, in a case in which the rotation axis of the hinge is disposed in an arbitrary virtual plane among the first virtual plane to the third virtual plane in the space formed by the first virtual plane, the second virtual plane, and the third virtual plane, it is possible to minimize the clearance between the first front surface and the second front surface by causing the second front surface to move on the side of the rotation axis of the hinge because the second front surface is located in the virtual second front surface having an angle formed by an arbitrary virtual plane (any of the first angle, the second angle, and the third angle) as the angle with respect to the first front surface when the angle of the second front surface with respect to the first front surface is an angle formed by the arbitrary virtual plane (any of the first angle, the second angle, and the third angle). Also, it is possible to maintain a state in which the clearance between the first front surface and the second front surface is minimized by causing the second front surface to move on the side of the rotation axis of the hinge even in a case in which the angle of the second front surface with respect to the first front surface within the angle adjustment range from the first angle to the second angle is an any angle.

In a case in which the rotation axis of the hinge is not disposed in an arbitrary virtual plane among the first virtual plane to the third virtual plane, the second front surface is located at a position with larger deviation from the virtual second front surface having an angle formed by an arbitrary virtual plane (any of the first angle, the second angle, and the third angle) as the angle with respect to the first front surface when the angle of the second front surface with respect to the first front surface is the angle formed by the arbitrary virtual plane (any of the first angle, the second angle, and the third angle) as the rotation axis of the hinge and the arbitrary virtual plane are further separated from each other, it is thus not possible to locate the second front surface 32 in the virtual second front surface even if the second front surface 32 can be aligned parallel to the virtual second front surface, and it is not possible to cause the second width-direction end portion 33 of the second monitor device 31 to abut the first width-direction end portion 23 of the first monitor device 21 even if the second monitor device 31 is caused to move to the side of the hinge 91. As a result, the clearance between the first front surface and the second front surface is not minimized. However, since the rotation axis of the hinge is disposed inside the space formed by the first virtual plane, the second virtual plane, and the third virtual plane that is a region close to all the virtual planes, it is possible to maintain the state in which the clearance between the first front surface and the second front surface is minimized by causing the second front surface to move on the side of the rotation axis of the hinge even when the angle of the second front surface with respect to the first front surface within the angle adjustment range from the first angle to the second angle is any angle.

In the present invention, each of the first virtual plane, the second virtual plane, and the third virtual plane is preferably separated from the virtual second front surface on the rear side by the predetermined distance such that the first virtual plane, the second virtual plane, and the third virtual plane do not intersect the first fixing device.

With this configuration, each of the first virtual plane, the second virtual plane, and the third virtual plane is separated from the virtual second front surface on the rear side by the predetermined distance such that the first virtual plane, the second virtual plane, and the third virtual plane do not intersect the first fixing device. It is thus possible to prevent the rotation axis of the hinge from being disposed at a position at which interference with the first fixing device is caused.

In the present invention, an angle fixing unit configured to fix an angle of the second front surface with respect to the first front surface is preferably included.

With this configuration, the angle of the second front surface with respect to the first front surface is fixed when the second fixing device is caused to rotate relative to the first fixing device. Therefore, the angle of the second front surface with respect to the first front surface does not change even in a case in which the display device shakes or is inclined, and no problems occur for the operator who is viewing the display device to check the display screen.

In the present invention, a first regulating portion fixed to the first monitor device and having the arc-shaped first hole around the rotation axis of the hinge and a second regulating portion fixed to the second monitor device and having a coupling portion that can be disposed to penetrate through the first hole are preferably included.

With this configuration, the coupling portion fixed to the second monitor device penetrates through the arc-shaped first hole fixed to the first monitor device when the second fixing device is caused to rotate relative to the first fixing device. The coupling portion moves its position relative to the arc-shaped first hole in accordance with the angle of the second front surface with respect to the first front surface. Therefore, an angle adjustment range of the angle of the second front surface with respect to the first front surface is regulated in a case in which the coupling portion is disposed. It is thus possible to prevent the angle of the second front surface with respect to the first front surface from being an excessively large or small angle.

In the present invention, the coupling portion preferably includes a position fixing unit fixing the position where the communication with the first hole is established, and the first hole, the coupling portion, and the position fixing unit preferably form the fixing unit.

With this configuration, the position fixing unit can fix the coupling portion to the position where the coupling portion is inserted into the first hole. If the position fixing unit fixes the coupling portion to the first hole, the angle of the second front surface with respect to the first front surface is fixed. In other words, it is possible to realize the fixing unit by using the first hole, the coupling portion, and the position fixing unit.

In the present invention, the first fixing device and the second fixing device are preferably rotatable by the hinge to positions at which the first front surface and the second front surface are parallel to and separated from each other.

With this configuration, it is possible to achieve a state in which the first fixing device and the second fixing device are parallel to and separated from each other. In this state, it is possible to shorten the length in the width direction as compared with a state in which the first fixing device and the second fixing device are aligned side by side and to fold the display device into a state with excellent transportability.

In the present invention, the first hole is preferably located behind the first fixing device except for a portion behind the rotation axis.

With this configuration, the first hole is located behind the first fixing device except for the portion behind the rotation axis. Although the thickness of the first monitor device from the first front surface to the rear end portion increases by the amount corresponding to the formation of the first hole if the first hole is formed behind the rotation axis, the first hole is formed behind the first fixing device except for the portion behind the rotation axis, and it is thus possible to reduce the thickness of the first regular portion to be thin.

In the present invention, the first hole is preferably located between the plane where the first front surface is located and the plane where the second front surface is located in a case in which the first front surface and the second front surface are rotated by the hinges up to the positions at which the first front surface and the second front surface are parallel to and separated from each other.

With this configuration, the first hole is located between the plane where the first front surface is located and the plane where the second front surface is located when a state in which the first fixing device and the second fixing device are parallel to and separated from each other is achieved. Since the first hole is accommodated between the plane where the first front surface is located and the plane where the second front surface is located in this state, it is possible to enhance transportability when the display device is folded.

Although the embodiment of the present invention has been described hitherto, only a specific example has been illustrated, the description is not intended to limit the present invention, in particular, and the design such specific configurations can be appropriately changed. Also, although the rotation axis XI of the hinge 91 is disposed at the point D in the present embodiment, the rotation axis XI may be disposed at any position as long as it is disposed inside the space S.

### Reference Signs List

1: Remote operation apparatus
20: Display device
21: First monitor device
22: First front surface
23: First width-direction end portion
24: First rear surface
31: Second monitor device
32: Second front surface
33: Second width-direction end portion
34: Second rear surface
71: First fixing device
81: Second fixing device
91: Hinge
111: First regulating portion
113: First hole
121: Second regulating portion
123: Fastening unit
124: Position fixing unit
126: Angle fixing unit
321, 322, 323: Virtual second front surface
E, F, G: First to third virtual planes

## Claims

1. A display device comprising:
an opening and closing device including a first fixing device, a second fixing device, and a hinge configured to rotatably hold the first fixing device and the second fixing device;
a first monitor device including a first front surface and held by the first fixing device; and
a second monitor device including a second front surface and held by the second fixing device such that a distance to a rotation axis of the hinge is adjustable,
wherein when a plane passing through a width-direction end portion of the first front surface is defined as a virtual second front surface, parallel planes separated from the virtual second front surface by predetermined distances on a rear side are defined as a first virtual plane, a second virtual plane, and a third virtual plane in each of states in which an angle of the virtual second front surface with respect to the first front surface is a first angle, a second angle that is greater than the first angle, and a third angle at substantially a middle between the first angle and the second angle, and the rotation axis of the hinge is disposed on a plane among the first virtual plane to the third virtual plane in a space formed by the first virtual plane, the second virtual plane, and the third virtual plane and inside the space in a view in a direction parallel to the rotation axis of the hinge, and
the second monitor device has the second front surface disposed at a position away from the rotation axis of the hinge toward a front side of the second monitor device by the predetermined distance.

2. The display device according to claim 1, wherein each of the first virtual plane, the second virtual plane, and the third virtual plane is separated from the virtual second front surface on the rear side by the predetermined distance such that the first virtual plane, the second virtual plane, and the third virtual plane do not intersect the first fixing device.

3. The display device according to claim 1 or 2, further comprising:
an angle fixing unit configured to fix an angle of the second front surface with respect to the first front surface.

4. The display device according to claim 3, further comprising:
a first regulating portion fixed to the first monitor device and including a first hole with an arc shape around the rotation axis of the hinge; and
a second regulating portion fixed to the second monitor device and including a coupling portion that is able to be disposed to penetrate through the first hole.

5. The display device according to claim 4,
wherein the coupling portion includes a position fixing unit configured to fix a position where communication with the first hole is established, and
the first hole and the coupling portion form the angle fixing unit.

6. The display device according to any one of claims 1 to 5, wherein the first fixing device and the second fixing device are rotatable by the hinge to positions at which the first front surface and the second front surface are parallel to and separated from each other.

7. The display device according to claim 4 or 5, wherein the first hole is located behind the first fixing device except for a rear side of the rotation axis.

8. The display device according to any one of claims 4, 5, or 7, wherein in a case in which the first front surface and the second front surface are caused to rotate by the hinge to positions at which the first front surface and the second front surface are parallel to and separated from each other, the first hole is located between a plane where the first front surface is located and a plane where the second front surface is located.
